# EUROPEAN PATENT SPECIFICATION

(11) **EP 1 557 062 B1**
(45) Date of publication and mention of the grant of the patent: **01.03.2006**
(21) Application number: 02779519.4
(22) Date of filing: 30.10.2002
(51) Int. Cl.: H04Q 7/38

(54) **OPTIMIZED MOBILITY MANAGEMENT BASED ON LOCATION-RELATED CONTEXT**
OPTIMIERTES MOBILITÄTSMANAGEMENT AUF BASIS VON ORTSBEZOGENEM KONTEXT
GESTION DE MOBILITE OPTIMISEE BASEE SUR UN CONTEXTE LIE A LA POSITION

(43) Date of publication of application: 27.07.2005
(73) Proprietor: NTT DoCoMo, Inc., Tokyo 100-6150 (JP)
(72) Inventor: WEI, Qing, 81735 München (DE); PREHOFER, Christian, 81477 München (DE)
(74) Representative: HOFFMANN EITLE
(86) International application number: PCT/EP2002/012120
(87) International publication number: WO 2004/040933

(56) References cited:
- EP-A- 1 164 804
- WO-A-99/56476
- WO-A-02/060204
- US-A- 5 832 363

## Description

### FIELD OF INVENTION

The present invention relates to optimised mobility management based on a location-related context, in particular to a method of generating a location-related context with respect to a mobile node receiving services in a mobile communication environment and a related apparatus. Further, the present invention relates to a method of executing mobility management in a mobile communication network based on the location-related context.

### TECHNOLOGICAL BACKGROUND

In WO 99/56476 there is described a communication system providing communication services from a plurality of base stations in the corresponding plurality of registration areas to a mobile station. A described method includes a pre-registration of mobile stations with a plurality of base stations according to a predefined plan that includes a pattern of location and time of mobile station expected to be in the plurality of registration areas.

Further, in EP 1 164 804 A1 there is described a service delivery method and system qualifying users as authorized benefit from an instance of a particular service. There are stored a location data indicating of a location for service delivery and a service instance element classifying a service for which the user is qualified. Subsequently, there is detected a location match between the location of the user and a location indicated by location data for initiation of service delivery.

In a mobile communication environment, e.g., a mobile communication telephone system, it is generally difficult to know the location and mobility of mobile nodes, e.g., mobile telephones, mobile PDAs, laptop computers, etc. in advance. This is major reason why the quality of wireless connection today varies in an unpredictable way.

Another reason of mobile communication quality degradation is that wireless channel operative characteristics vary significantly over a time. In combination with the unpredictability of movement of the mobile node, the prediction of wireless channel operative characteristics is difficult if not impossible. Therefore, the quality of service QoS for wireless communication is difficult to assure.

Yet another, even more difficult problem occurs during handover, i.e. when a mobile node changes the radio access point in the mobile communication environment. The reason for this is that eventually the new access point or equivalently the new cell has not enough bandwidth available or even no bandwidth at all, so that the quality of service may be even more degraded or the service will finally be interrupted.

Yet another problem is, that in view of paging mechanisms in existing wireless communication environments paging areas usually have a large size to avoid waste of radio resources through increased signaling when a mobile node is crossing paging area boundaries. However, what is actually desirable are paging areas suitable to even further reduce the paging signaling in a mobile communication environment.

### SUMMARY OF INVENTION

In view of the above, the object of the present invention is to improve mobility management in a mobile communication environment through anticipation of the mobile node movement.

To achieve this object, a first aspect of the present invention relates,to a generation of a location-related context with respect to a mobile node receiving services in the mobile communication environment. The location-related context is used in support of mobility management in the mobile communication environment, e.g., control of handover between different access points in the mobile communication environment or control of paging processes.

According to the present invention it is proposed to acquire mobile node mobility information in response to a data transaction being related to mobile node mobility. The mobile node mobility information is used to establish the location-related context for the mobile node as relation between a mobile node identity and the mobile node mobility information.

The present invention uses the insight that usually a mobile node does not exist as such in a mobile communication environment. To the contrary, a movement pattern of the mobile node can be related to data transactions having an impact on the mobility of the mobile node.

In view of this, the consideration of such data transactions allows to acquire mobile node mobility information and to establish a location-related context for the mobile node as relation between the mobile node identity or profile and the generated mobile node mobility information. This relation between mobile node identity and mobile node mobility information is a perfect basis for subsequent support of mobility management in a mobile communication environment, e.g., support of handover or paging by using the mobility information derived from the data transaction.

According to a preferred embodiment of the present invention the data transaction may be of a type that determines a mobile node moving route and/or mobile node moving schedule. Typical examples for such data transactions are a data transaction being related to the purchase of a transport ticket, to the payment of a toll charge, and/or a traveling reservation.

All these examples of data transactions have a relation to the movement of the mobile node in the mobile communication environment, both, from the viewpoint of moving route and moving schedule. Therefore, it is possible to predict the next access point and access time when a mobile node will cross certain cell boundaries in the mobile communication environment and to predict how long the mobile node will stay in each cell. This allows for optimized handover as handover will be prepared to the access point that has the closest match to the moving route and schedule. Also the preparation of such handovers may be coordinated well in advance.

According to another preferred embodiment it is assumed that a mobile node is located within a restricted area, also referred to as a sojourn area in the following, during a certain period of time. Here, a related data transaction may be hotel check-in, a clock-in of an employee at company facilities, a computer log-in at a computer center, and/or the purchase of an admission ticket to a facility like a cinema, a museum, etc.

According to this preferred embodiment it is possible to achieve optimized determination of a paging area. In other words, paging signals will not be forwarded to access points where it is known in advance that the mobile node may not be reached.

According to yet another preferred embodiment of the present invention the generation of the location-related context relies on any type of automatized data transaction, e.g., an electronic data transaction, an optical data transaction, e.g., laser scanning of a bar code, and/or any type of Internet data transaction.

Therefore, the acquisition of mobility information is achieved without user interaction. Further, also the subsequent step of establishing a relation between the generated mobility information and the mobile node identity may be automatized, therefore achieving a very efficient way to support mobility management.

According to another preferred embodiment of the present invention the generated location-related context for the mobile node may be either stored in a network node of the mobile communication environment or in the mobile node itself. Also a hybrid approach to storage of context related information, both, in the mobile network and in the mobile node is well supported by the present invention.

This preferred embodiment of the present invention allows to assign the mobility management functionality using the established location-related context either at the network side or at the mobile node or at a combination thereof, whatever is appropriate for a particular type of mobility management application.

Further, according to the present invention it is also possible to exchange location-related context information between the mobile node and the mobile communication environment on exchange of related requests and responses.

While above, different aspects of the generation of a location-related context for a mobile node moving in a mobile communication environment have been described, a further aspect of the present invention is related to the use of such a location-related context for mobility management in the mobile communication environment.

Therefore, this further aspect is related to the execution of mobility management, e.g., execution of handover control or paging area size control. It relies on inquiring of availability of the location-related context for the mobile node moving in the mobile communication network and on executing the mobility management as a function of availability of the location-related context. This allows to achieve mobility management using location-related context information.

Therefore, this aspect of the present invention allows to achieve selective mobility management in the most flexible way. In a first case, where a location-related context has been previously generated, the inquiry on availability of the location-related context will be affirmative, so that mobility management will be executed using this location-related context. Otherwise, such a location-related context will not be available and the mobility management will be executed using standard procedure not relying on a location-related context.

Therefore, mobility management in the sense of the present invention is a selective mobility management making use of a location-related context whenever available to predict a moving pattern of the mobile node in the mobile communication environment. Typical application scenarios are handover anticipation and paging optimization, executed either in a network node of the mobile communication environment or at the mobile node.

According to a preferred embodiment being related to handover anticipation available location-related context information is used to anticipate the next access point for handover.

Preferably, the location-related context provides information like current location of the mobile node, mobile node moving route, mobile node moving schedule, mobile node moving direction, mobile node moving speed, mobile node schedule interruption, etc.

Therefore, according to the present invention it is possible to use a great variety of location-related context information according to the requested accuracy of anticipation for the next access point.

Further, the incorporation of not only a moving schedule but also an interruption of a movement of the mobile node, which occurs only in real time, allows for a further improvement of anticipation accuracy.

According to a further preferred embodiment of the present invention it is also proposed to reserve communication resources at the next access point anticipated for handover.

Overall, support of handover using a location-related context allows for anticipation of a potential handover cell and in conclusion for a predictable handover. Therefore, it is possible to reserve radio resources according to the required bandwidth at the correct access point at a given time frame, which reduces call dropping probability. At the same time, the handover process itself may be optimized - e.g., forward data packets to a new access point even before there is radio contact with the new access point or make QoS reservation earlier - so as to decrease handover latency to a great extent.

A further preferred embodiment of the present invention relates to paging optimization after generation of a location-related context. According to this preferred embodiment of the present invention it is proposed to achieve paging area size optimization as a function of location-related context.

According to this preferred embodiment, it is possible to optimize the paging area and to avoid a too large paging area on the one hand or a too small paging area on the other hand. If the paging area is too big, the paging process needs more bandwidth and more time to locate a mobile node in the mobile communication environment. If the paging area is too small, the mobile node will have to continuously update from one paging area to the next paging area leading to a decrease of signaling efficiency.

However, with knowledge of the location-related context of the mobile node, the size and shape of the paging area may be optimized, e.g., along a railway track.

Also, it should be noted that this type of mobility management is well adapted to a paging strategy where a paging request is sent to access points of a paging area simultaneously, also referred to as blanket polling in the following. Yet another alternative would be that a paging request is sent to access points in the order of decreasing location probability, namely sequential paging.

Here, using the location-related context for sequential paging the location probabilities at different access points may be calculated easily and precisely. E.g., an access point derived from a train schedule may be assigned the highest probabilities, while access points nearby this access point with highest probability may be assigned a lower probability.

As outlined previously with respect to management of handover between different access points, also the handling of paging may be achieved in a selective manner on the basis of availability of the location-related context.

I.e., there is provided the step to fall-back to a standard paging functionality when there is no established location-related context for a considered mobile node.

While above, the present invention has been explained with respect to the management of handover and paging processes in a mobile communication environment, of course it is as well applicable to the prediction of location for other applications.

E.g., one might consider the planning of a meeting having knowledge of the location of mobile node user. Also, with the knowledge of a mobile node user destination and using the location-related context an Internet service provider may offer the mobile end user some destination specific local information like weather information, maps, transport connections, or a similar information with respect to the predicted and/or current location.

According to another preferred embodiment of the present invention there is provided a computer program product directly loadable into the internal memory of a mobile node in a mobile communication environment or a related mobile communication environment control node, e.g., a base station controller in a cellular communication network, comprising software code portions for performing the inventive method steps when the product is run on a processor unit.

Therefore, the present invention is also provided to achieve an implementation of the inventive method steps on computer or processor systems. In conclusion, such implementation leads to the provision of computer program products for use with a computer system or more specifically a processor comprised in, e.g., a mobile node or a communication environment control node.

The program(s) defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or Internet and/or telephone networks via modems or other interface devices. It should be understood that such media, when carrying processor readable instructions implementing the inventive concept represent alternate embodiments of the present invention.

### BRIEF DESCRIPTION OF DRAWING

In the following preferred embodiments of the present invention will be explained with reference to the drawing in which:
- Fig. 1: shows a schematic diagram illustrating the generation and use of a location-related context according to the present invention;
- Fig. 2: shows a schematic diagram of an apparatus for generating a location-related context according to the present invention;
- Fig 3: shows a flowchart of operation of the apparatus for generating a location-related context shown in Fig. 2;
- Fig. 4: shows a further detailed flowchart of operation of the apparatus for generating a location-related context as shown in Fig. 2;
- Fig. 5: shows a schematic diagram of an apparatus for executing mobility management using a location-related context;
- Fig. 6: shows a schematic diagram of the mobility management unit shown in Fig. 5;
- Fig. 7: shows a flowchart of operation executed in the mobility management unit shown in Fig. 4 and 5;
- Fig. 8: shows a flowchart of a handover control method executed by the handover control unit shown in Fig. 6;
- Fig. 9: shows a flowchart of a paging control method executed by the paging control unit shown in Fig. 6;
- Fig. 10: shows a schematic diagram of a mobile node adapted to support mobility management based on a location-related context according to the present invention;
- Fig. 11: shows a flowchart of operation for the mobile node shown in Fig. 10; and
- Fig. 12: shows an example for the application of location-related context based mobility management according to the present invention to a mobile communication network.

### DESCRIPTION OF BEST MODE AND PREFERRED EMBODIMENTS

In the following best mode and preferred embodiments of the present invention will be described with reference to the drawing.

Heretofore, the term location related context to be used in the following is to be understood as location and movement conditions according to which a mobile node occurs in a mobile communication environment. The term handover may be understood as forwarding of an ongoing wireless communication process from one access point to another access point in the mobile communication environment; according to a first option the forwarding is instructed by the access nodes and according to a second variant the forwarding is achieved in a decentralized manner by the mobile node itself.

Further, paging is related to a signaling of mobile nodes through mobile communication environment access points. In particular, paging is executed during a dormant mode of mobile nodes where mobile nodes restrict their availability to receive signalling messages. A paging area is a collection of access points in the mobile communication environment that are signalled to contact a mobile node. A mobile node usually is required to signal the mobile communication environment when it crosses different paging area boundaries so as to maintain a rough estimate of the location of the mobile node.

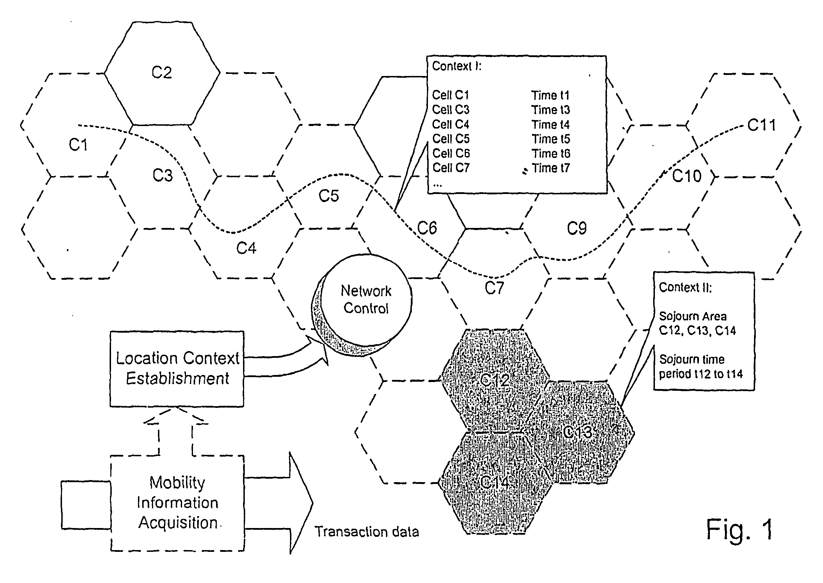

Using the terminology outlined above, the generation and use of a location-located context according to the present invention will be explained with reference to Fig. 1.

As shown in Fig. 1, according to the present invention it is proposed to establish a relation between mobility information derived from a data transaction and a network management in a mobile communication environment.

The present invention starts from the understanding that an end user of a mobile node will not only move in the mobile communication environment but also initiate data transaction being of relevance to the mobility of the end user. One typical example would be the purchase of a train ticket, etc. The use of this information allows the establishment of a location context for subsequent forwarding to the network management in the mobile communication environment.

As shown in Fig. 1, a location context in the sense of the present invention may be related to the movement of a mobile node in the mobile communication environment, e.g., crossing cells C1, C3, C4, C5, C6, C7, C9, C10, C11. Besides the identification of cells which are visited by the mobile node on its route, a second source of information is a period of time during which the mobile node resides in each such cell. This time period may be defined, e.g. through the time of entering a specific cell, such as time t1 for cell C1, etc. The time when a mobile node leaves such a cell is identical to the time of entering next cell.

Therefore, a first option to establish a location-related context would be to identify a moving route, a moving schedule and the identity of the mobile node moving along such a route.

As also shown in Fig. 1, a location related context is not necessarily related to a movement of a mobile node but may as well be related to a situation where a mobile node resides in at least one cell, e.g., cell C12, C13, C14 over a longer period of time, which area will also be referred to as,a sojourn area in the following. Here, the establishment of a location-related context would be the identification of such a sojourn area, further the sojourn time period, and the identity of the mobile node residing in a specific sojourn area.

From the above, it becomes clear that the present invention relies on the establishment of a location-related context for a specific mobile node on the one hand and on the use of such a location-related context after establishment for mobility management in the mobile communication environment on the other hand. In the following, further details of these two aspects of the present invention will be explained.

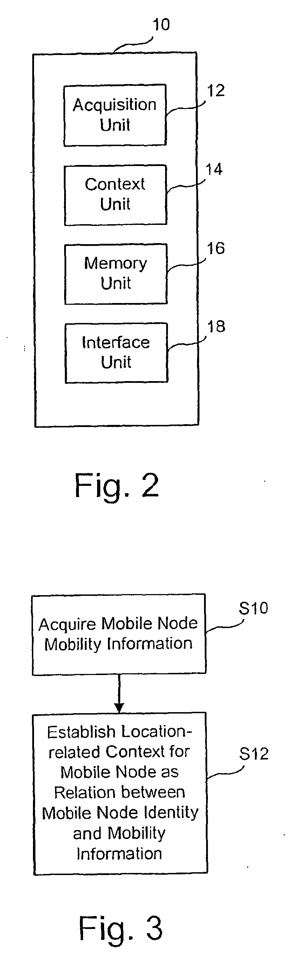

Fig. 2 shows a schematic diagram of an apparatus for generating a location-related context according to the present invention.

As shown in Fig. 2, the apparatus 10 for generating a location-related context comprises an acquisition unit 12, a context unit 14, a memory unit 16, and an interface unit 18.

Fig. 3 shows a flowchart of operation of the apparatus 10 for generating a location-related context shown in Fig. 2.

As shown in Fig. 3, operatively the acquisition unit 12 will acquire a mobile node mobility information in a step S10. Further, the context unit 14 establishes a location-related context for a mobile node in a step S12. The location-related context is a relation between some type of mobile node identification and the mobility information provided by the acquisition unit 12.

Further, operatively the memory unit 16 of the apparatus 10 is provided for storage of location-related context information. The interface unit 18 is provided for exchange of such location-related context and related requests.

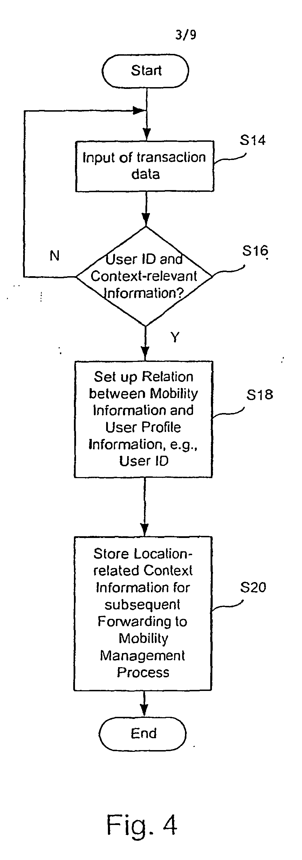

Fig. 4 shows further details of operation of the apparatus 10 for generating a location-related context.

As shown in Fig. 4, the step S10 to acquire mobile node mobility formation achieved by the acquisition unit 12 divides into two sub-steps. In a first step S14, transaction data is input to the acquisition unit 12.

Then, in a subsequent step S16 it is evaluated whether the transaction data carries some context relevant information or not. Preferably, the transaction data should also carry some identification of the mobile node for subsequent use during mobility management in the mobile communication environment. As an alternative, the provision of an identification of a mobile node may be requested once transaction data with context relevant information has been identified in step S16.

As shown in Fig. 4, if the interrogation step S16 is negative, the procedure will terminiate; an alternative, not shown shown in Fig.4, would be to branch back to step S14 for input of further transaction data. If the interrogation step S16 is positive, the acquisition unit 12 will forward the available information to the context unit 14 for execution of subsequent step S18.

As shown in Fig. 4, the step 18 is provided for set-up of a relation between mobility information and user profile information such as the user ID. Then, the context unit 14 will forward the generated information to the memory unit 16 which operatively stores the location-related context information in a step S20 for subsequent forwarding to the mobility management process through the interface unit 18.

As outlined above, the mobility information may be any type of information, e.g., the moving route and schedule of a mobile node or otherwise a sojourn area and related time period of a mobile node. Typical examples for a transaction data for the former case is transaction data being related to the purchase of a ticket like a train or bus ticket, the payment of a toll charge or any type of travelling reservation. With any transaction it will become clear that the mobile node and his end user will move along a certain route defined by the railway, the highway, or travelling route.

In the latter case where the mobility information is related to a sojourn area typical examples for transaction data are the check-in at a hotel, the clock-in of an employee at a company area, the log-in to a computer network or the purchase of some type of admission ticket, e.g., to an art gallery, to an entertainment or amusement park, etc.

In any case, it will be clear that the end user of a mobile node may be signalled in a very restricted area compared to the overall expansion of the mobile communication environment. This is particularly useful for paging optimisation, as will be outlined in more detail in the following.

Still further, it should be noted that the present invention well supports any type of data transaction, e.g. an electronic data transaction at a ticket server, or any type of Internet data transaction. Alternatively, mobility information may also be generated through scanning of a bar code with an optical laser scanner, etc.

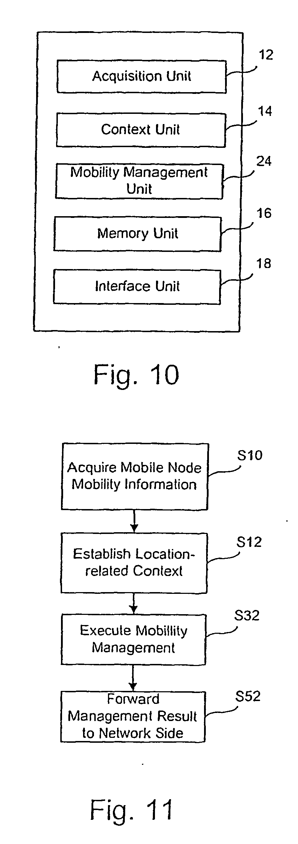

Still further, while above the apparatus 10 for establishing a location related context has been described in a general way, it should be clear that this apparatus and the related functionality may either be achieved through integration of related sub-units into the mobile communication environment or a dedicated stand alone apparatus, e.g., as ticket server, toll charge server, travelling reservation server etc. As will explained in more detail in the following with respect to Fig. 10 and 11, the functionality to generate and establish a location related context may also be integrated into the mobile node itself.

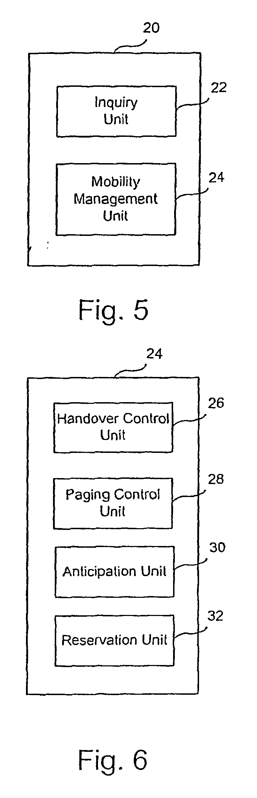

While above different aspects of location related context generation and establishment have been explained with respect to Fig. 2 to 4, in the following the use of such information for subsequent mobility management in the mobile communication environment will be explained with respect to Fig. 5 to 9.

Fig. 5 shows a schematic diagram of an apparatus 10 for executing mobility management, and Fig. 6 shows a further detailed schematic diagram of the mobility management unit shown in Fig. 5.

As shown in Fig. 5, the apparatus 20 for mobility management comprises an inquiry unit 22 and a mobility management unit 24. As shown in Fig. 6, the mobility management unit 24 comprises a handover control unit 26, a paging control unit 28, an anticipation unit 30, and a reservation unit 32.

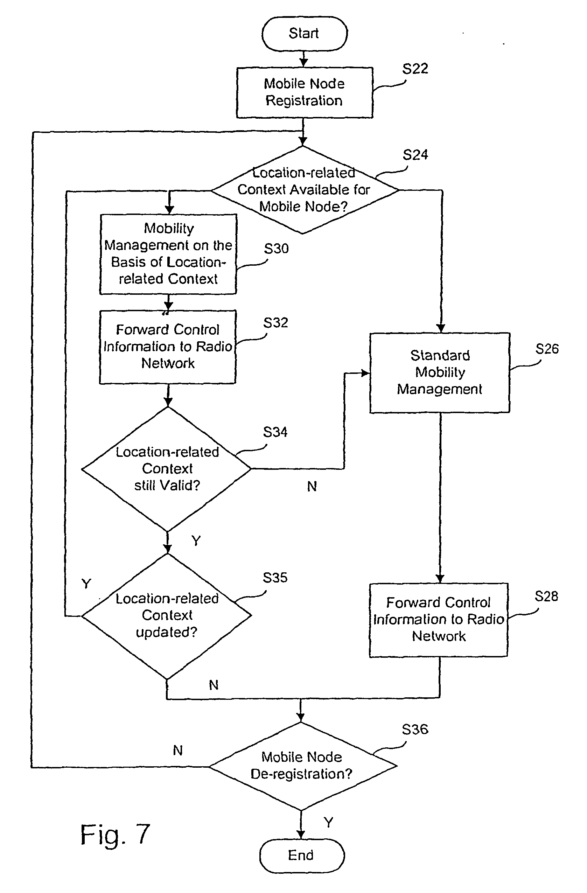

In the following, the operation of the apparatus 20 for mobility management will be explained with reference to Fig. 7.

As shown in Fig. 7, after mobile node registration in a step S22, the inquiry unit 22 will determine whether a location-related context is available for the registered mobile node or not in a step S24. Depending on the result of determination, the mobility management unit 24 will execute its task as a function of availability of the location-related context. If no location-related context is available, the mobility management unit will execute a standard mobility management in a step S26 and then forward the related control information to the radio network of the mobile communication environment in a step S28.

As shown in Fig. 7, if a location-related context is indeed available for a mobile node, then the mobility management unit 24 will execute the mobility management on the basis of the location-related context in a step S30 and forward related control information to the radio network of the mobile communication environment in a step S32.

After this step S32 two different scenarios may occur. The first one is that the location of the mobility node in the mobile communication environment is in compliance with the available mobility information so that the generated control information will be correct. Otherwise, there may also occur a situation where the generated location related context is no longer valid, e.g., when an end user leaves a train or a restricted area before the scheduled time, so that the generated control information becomes void.

As shown on Fig. 7, to handle this situation there is provided a step S34 to determine whether the generated control information is valid or not. Optionally, there may also be provided a step S35 to determine whether the location-related context has been updated after it has been evaluated to be still valid. In a case where the location-related context is no longer correctstep S34 will branch off to step S26 to generate standard mobility management. In a case where the location-related context has been updated steps S30 to S34 will be repeated using this updated location related context. Otherwise, the procedure will proceed to step S36 to interrogate mobile node de-registration so as to either go back to the evaluation of availability of a location-related context or terminate the overall procedure.

From the flowchart shown in Fig. 7, it should be clear that some extra time may be required to execute standard mobility management when the mobility information and the corresponding location-related context are no longer valid due to an un-predicted change of behaviour of the end user. However, this rare, extra time is well compensated for by the significant increase in efficiency of mobility management in the mobile communication environment.

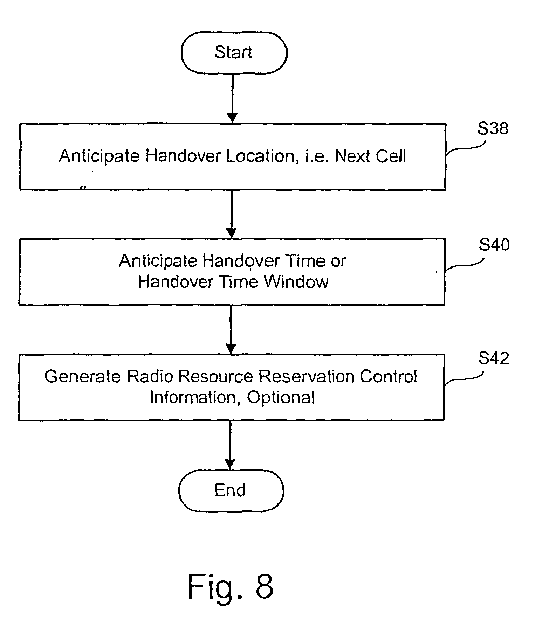

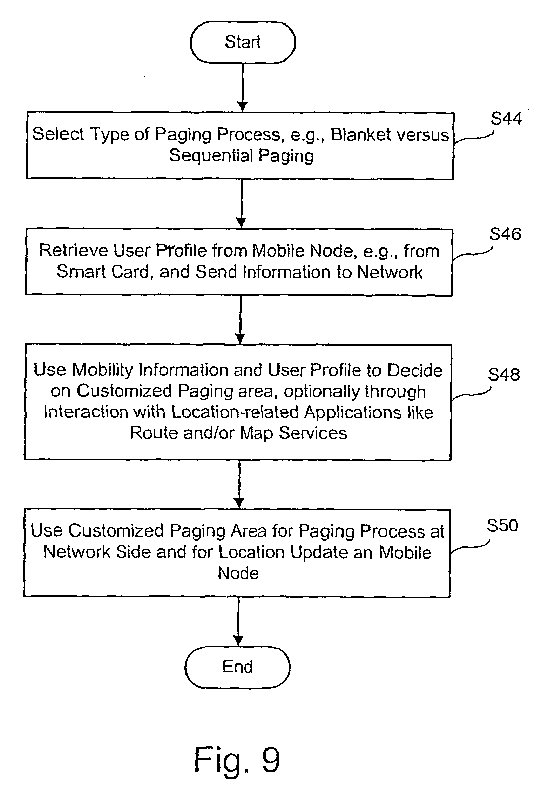

In the following, further details of mobility management on the basis of location-related context will be explained with reference to Fig. 8 and 9, respectively.

Fig. 8 shows a flowchart of a handover control process executed by the handover control unit 26 shown in Fig. 6.

As shown in Fig. 8, handover control in the sense of the present invention involves anticipation of a handover location, i.e. the next access point in a step S38. Further to this, a step S40 achieves anticipation of handover time or as alternative of a handover time window. Optionally, there is provided a step S42 which allows to reserve radio resources in advance to handover so as to minimize disturbances of wireless communication channels during handover. It should be noted that the step of anticipation of the next access point S38, S40 is achieved by the anticipation unit 30 shown in Fig. 6 and that the step S42 of radio resource reservation is achieved by the reservation unit 32 shown in Fig. 6.

Therefore, handover control in the sense of the present invention differs over previously known handover procedures in that anticipation of the next cell is achieved using a previously generated location-related context, and in that this may be achieved in combination with a radio resource reservation.

Fig. 9 shows a flowchart of a paging control procedure according to the present invention. The paging control procedure is executed by the paging control unit 28 shown in Fig. 6.

As shown in Fig. 9, a first step S44 of the inventive paging control procedure relates to the selection of a type of paging process, e.g., blanket versus sequential paging. In the first case a plurality of access points will be signalled simultaneously while in the latter case a plurality of access points will be signalled in sequential order according to a probability to reach a mobile node.

Then, in a step S46 a user profile is retrieved from the mobile node, e.g., from a smart card of a mobile telephone, and then sent to the mobile communication environment. The network node controlling the paging process uses the available mobility information and the retrieved user profile to decide on a customized paging area, i.e. a paging area optimised in compliance with available mobility information. Optionally, the paging area may also be optimised in view of location-related applications like route and/or map services. In a final step S50 the customized paging area is used for the paging process and for location update of a mobile node.

It should be noted that paging area optimization in the sense of the present invention is typically achieved when a mobile node crosses a boundary of an actual paging area using existing location-related context information. Here, the whole procedure for paging area optimization will be invoked. A further scenario would be that the location-related context information and related user profile changes while a mobile node still remains within a determined paging area. Then, this new information will be used to fully re-calculate the paging area instead of optimisation thereof, e.g., at a new radio network control node.

While above, the present invention has been explained with respect to the aspects of establishment of location-related context on the hand and the use of this location-related context for mobility management, it should be noted that of course both aspects may be combined such that a mobile node executes, both, location-related context establishment and mobility management support.

Heretofore, Fig. 10 shows a schematic diagram of a mobile node adapted to support mobility management in the sense of the present invention, and Fig. 11 shows a flowchart of operation for the mobile node shown in Fig. 10. Those elements and steps explained previously with respect to the Figs. 2 to 9 are denoted using the same reference numerals and a repeated explanation thereof will be omitted.

As shown in Fig. 10, the difference between an apparatus solely adapted to generation in the establishment of a location-related context as shown in Fig. 2 and a mobile node adapted to support mobility management is that further to the units shown in Fig. 2 the mobile node will also comprise the mobility management unit 24. As shown in Fig. 11, this allows not only to execute the step S10 for acquisition of mobile node mobility information and the step S12 to establish the location-related context in the mobile node, but also the step S32 to execute mobility management in the mobile node. Then, in a step S52 the result of mobility management will be forwarded to the mobile communication environment for subsequent use during mobility management.

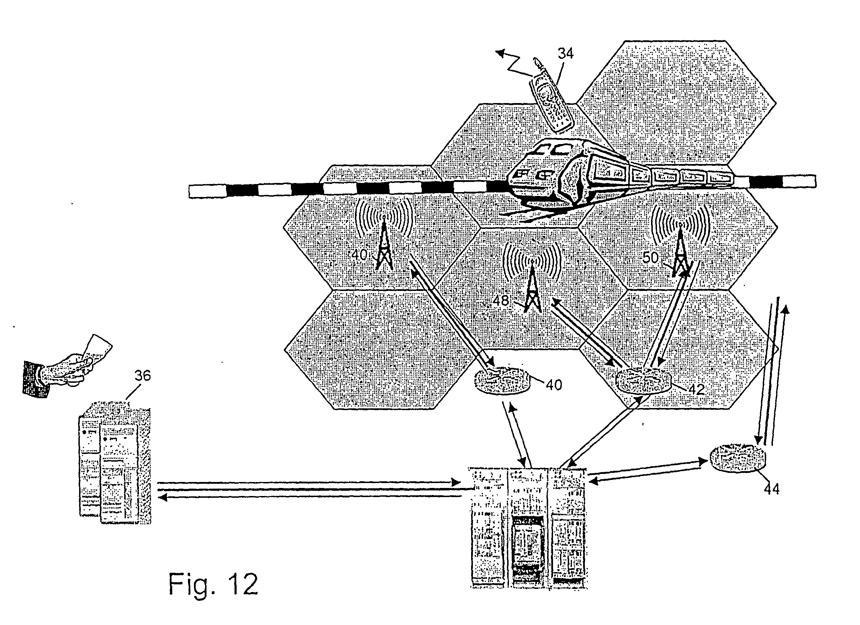

In the following, different examples for location-related context based mobility management according to the present invention will be explained with reference to Fig. 12.

For the example illustrated in Fig. 12 it is assumed that the mobile node is a mobile telephone 34 and that the apparatus for generating a location-related context is an ticket server 36. The ticket server 36 is connected to a mobile switching centre 38. The mobile switching centre 38 is connected to base station controllers 40, 42, 44 which controls base stations 46, 48, 50, ... .

As shown in Fig. 12, when a ticket is purchased for transportation using the mobile node identity this mobile node identity will be related to a certain transport time schedule and transport routine. In this way, for a certain period of time the mobility information of the mobile node can be derived from a predetermined train schedule. The relation between the mobile node identity and the mobility information will be set up when the ticket is issued in the ticket server 36, as first example. Here, a sample procedure for mobility management is as follows:
1. Buy a train or bus ticket using the identity of the mobile node, i.e. in a ticket office or via the Internet or on the train.
2. A connection between the ticket information and mobile node identification or alternatively the user profile will be set up and saved in the ticket server 36. The ticket information includes mobility information like train schedule, a route of the train and the schedule of the train. Here, the mobile node may be used for a purchase of the train ticket using mobile electronic payment. In the latter case, there will be an in immediate link between the use of the mobile node and the purchaser of the ticket.
3. When the mobile node is on the train, it achieves registration to the mobile communication network.
4. The mobile communication network will inquire the ticket server 36 on availability of mobility information and an established location-related context.
5. The ticket server 36 either replies with an available established location-related context or with a signal that no such context is available.
6. When no such information is available, the mobile communication network, e.g., the mobile switching centre 38 or the one of the base station controllers 40, 42, 44 will adopt the normal handover scheme. Otherwise, the mobile communication network will do some calculations on the movement of the mobile node.
   In particular, the calculations are used to anticipate the next cell for handover, e.g., according to the direction of the train, train speed, train route and its current location. Therefore, the mobile communication network node may accurately calculate the new cell for handover and the time of handover.
   Using this handover anticipation, radio resources may be pre-allocated or coordinated in the new cell. E.g., when the radio resources are reserved in advance, during the time that the reservation is active and when the mobile node actually arrives at the new cell, no other user in the new cell may occupy the reserved resources. Therefore, the chance of call dropping will be reduced and preparation can be done in advance, so that handover latency will be greatly decreased.
7. According to the anticipation result, the appropriate control information will then be sent to the correct base station 46, 48, 50 to prepare for handover.
8. When the mobile node user changes his plan and leaves the train, the mobile communication network will not find the mobile node in the expected cell and therefore the mobile communication network falls back to normal handover.

A further example being related to the scenario shown in Fig. 12 is a procedure for paging optimization as follows:
1. Initially, a train ticket is bought using the mobile node identity, e.g., in a ticket office or via the Internet or on the train itself.
2. A relation between the ticket information and the user profile or mobile node identity is set up and saved in the ticket server 36. The mobility information includes the train schedule and the route of the train. Again, the mobile node may be used for payment of the ticket via some electronic payment and then there is an immediate link between the end user of the mobile node and the purchaser of the train ticket.
3. When the mobile node gets on the train, it will register to the mobile communication network as normal.
4. Then, the mobile communication network will inquire the ticket server 36 for availability of the location-related context.
5. The ticket server 36 will reply either with an available location-related context or with a signal that no such context is available.
6. If no location-related context is available, the mobile communication network, e.g., the mobile switching centre 38 or any of the base station controllers 40, 42, 44 will use the normal paging scheme. Otherwise, the related network nodes will do calculations to locate the mobile node. To this end, different options exist as follows:
   a) The calculations may be very accurate. The mobile communication network calculates the exact location of the mobile node using the train route, speed, time, direction and train stops. Then, the mobile communication network can locate the mobile node directly using the calculation results and optimize the,paging process through direct access to the mobile node.
   b) When the calculations are not so accurate, the mobile node is located in a range of cells instead of a fixed location. Then, this information will be used to reduce the paging area, e.g., only along the rail track limited between certain stops. The paging process then only needs to be done for a limited number of cells in the mobile communication network.
7. When the mobile node end user changes his plan and leaves the train, the mobile communication network will not find the mobile node in the expected cell. Then, the mobile communication network will fall back to the normal paging process.

Another example is related to the storage of the location-related context and the achievement of the mobility management in the mobile node.

Not only for the example shown in Fig. 12 but in general, this is reasonable because it is possible to use the mobile node as an electric ticket and the train schedule can be used in the mobile node as a reminder. Further, the mobile node end user can know train information in advance while the mobile node and no ticket server 36 or in general no dedicated apparatus to derive a location-related context is used for this approach as the calculation to anticipate the next access point or is done in the mobile node.

A detailed procedure may be as follows:
1. Ticket purchase on traffic transportation or in a ticket office using the ID of the mobile node.
2. The ticket information and the train schedule will be saved as mobility information in the mobile node. The availability of this information triggers the mobile node to continue with the next step 4 when the mobile node gets on the train.
4. Once the mobile node is on the train, the mobile node starts with anticipation of the next cell or with the optimization of the paging area using the ticket information.
5. Then, the mobile node sends the anticipation result to the mobile communication network.
6. The mobile communication network uses the anticipated mobility management information transmitted from the mobile node either for handover and/or paging.

While above different aspects of the present invention have been described in general and with reference to a specific example thereof, it should also be noted that the different aspects of the present invention may well be achieved using active network technology. With active network technology different functionalities and related programs for handover/paging area calculation may be loaded to the related mobile communication network control nodes according to different scenarios explained above, i.e. algorithms and input parameters may be changed in a proper manner. Therefore, the appropriate program and related input parameters will be loaded in compliance with the available location-related context.

## Claims

1. Method of generating a location-related context with respect to a mobile node moving in a mobile communication environment in support of mobility management, **characterized by** the steps:
acquiring (S10) mobile node mobility information in response to a data transaction characterizing a mobile node mobility;
establishing (S12) the location-related context for the mobile node as relation between a mobile node identity and a mobile node mobility information.

2. Method according to claim 1, **characterized in that** mobile node mobility information identifies a mobile node moving route.

3. Method according to claim 2, **characterized in that** the mobile node mobility information further identifies mobile node moving schedule.

4. Method according to one of the claim 1 to 3, **characterized in that** mobile node mobility information identifies a mobile node sojourn area.

5. Method according to claim 4, **characterized in that** mobile node mobility information further identifies a mobile node sojourn time period.

6. Method according to on of the claim 1 to 3, **characterized in that** the data transaction is selected from a group comprising transport ticket data transaction, toll charge data transaction, and travelling reservation data transaction.

7. Method according to claim 4 or 5, **characterized in that** the data transaction is selected from a group comprising hotel check in data transaction, employee clock in data transaction, computer login data transaction, and admission ticket data transaction.

8. Method according to one of the claims 1 to 7, **characterized in that** the data transaction is selected from a group comprising an electronic data transaction, an optical data transaction, an Internet data transaction, and an end user data transaction.

9. Method according to one of the claims 1 to 8, **characterized in that** it further comprises the step of receiving a request for location-related context from the mobile communication environment and evaluating availability thereof.

10. Method according to claim 9, **characterized in that** it further comprises the step of forwarding the location-related context to the mobile communication environment for support of location-related context based mobility management.

11. Method of executing mobility management in a mobile communication network, comprising the steps:
inquiring (S16) on availability of a location-related context for a mobile node moving in the mobile communication environment, which location-related context is acquired in response to a data transaction characterizing a mobile node mobility;
executing mobility management (S18) as a function of available location-related context.

12. Method according to claim 11, **characterized in that** mobility management is executed after registration of the mobile node to the mobile communication environment.

13. Method according to claim 11 or 12, **characterized in that** the step of inquiring (S16) on availability of location-related context for a mobile node comprises the steps of:
- issuing a request for location-related context information to a network node storing related information;
- receiving location-related context in response to the request or an indication of non- availability.

14. Method according to one of the claims 11 to 13, **characterized in that** it further comprises a step of falling back to standard mobility management functionality when a location-related context is not available.

15. Method according to one of the claims 11 to 14, **characterized in that** it further comprises detecting an update of the location-related context and performing the mobility management on the basis of the updated location-related context.

16. Method according to one of the claims 11 to 15, **characterized in that** the mobility management (S18) is related to handover between different access points in the mobile communication environment and uses an available location-related context to anticipate the next access point for handover in the mobile communication environment and that the step of anticipating the next access point for handover uses information selected from a group comprising current location of mobile node, mobile node moving route, mobile node moving schedule, mobile node moving direction, mobile node moving speed, mobile node moving stops.

17. Method according to claim 16, **characterized in that** it further comprises the step of reserving communication resources at the next access point for handover according to the derived anticipation result.

18. Method according to claim 16 or 17, **characterized in that** it further comprises the step of falling back to standard handover functionality when the mobile node is not identified at the anticipated next access point.

19. Method according to one of the claims 11 to 15, **characterized in that** the mobility management (S18) is related to a determination of a paging area with respect to the mobile node, that the determination of the paging area achieves a paging area size adaptation as a function of the location-related context, and that paging area size is determined according to a group of access points in the mobile communication environment using information selected from a group comprising current location of mobile node, mobile node moving route, mobile node moving schedule, mobile node moving direction, mobile node moving speed, mobile node moving stops, mobile node sojourn area, and a mobile node sojourn time period.

20. Method according to claim 19, **characterized in that** it further comprises the step of falling back to standard paging functionality when the mobile node is not identified in the determined paging area.

21. Apparatus (10) for generating a location-related context with respect to a mobile node moving in a mobile communication environment in support of mobility management, **characterized by**:
an acquisition unit (12) adapted to acquire mobile node mobility information in response to a data transaction characterizing a mobile node mobility;
a context unit (14) adapted to establish the location-related context for the mobile node as relation between a mobile node identity and a mobile node mobility information.

22. Apparatus according to claim 21, **characterized in that** the acquisition unit (12) is adapted to provide mobile node mobility information as mobile node moving route.

23. Apparatus according to claim 21 or 22, **characterized in that** the acquisition unit (12) is adapted to provide the mobile node mobility information as mobile node moving schedule.

24. Apparatus according to one of the claim 21 to 23, **characterized in that** the acquisition unit (12) is adapted to provide mobile node mobility information as mobile node sojourn area.

25. Apparatus according to claim 24, **characterized in that** the acquisition unit (12) is adapted to provide mobile node mobility information as mobile node sojourn time period.

26. Apparatus according to claim 24 or 25, **characterized in that** the acquisition unit (12) is adapted to process a data transaction selected from a group comprising transport ticket data transaction, toll charge data transaction, and travelling reservation data transaction.

27. Apparatus according to claim 24 or 25, **characterized in that** the acquisition unit (12) is adapted to process a data transaction selected from a group comprising hotel check in data transaction, employee clock in data transaction, computer login data transaction, and admission ticket data transaction.

28. Apparatus according to one of the claims 21 to 27, **characterized in that** the acquisition unit (12) is adapted to process an electronic data transaction, an optical data transaction, and an end user data transaction.

29. Apparatus according to claim 21, **characterized in that** it comprises an interface unit (18) that is adapted to receive a request for location-related context from the mobile communication environment and to forward the location-related context to the mobile communication environment.

30. Apparatus according to claim 21, **characterized in that** it further comprises an evaluation unit adapted to evaluate an availability of a location-related context in response to a corresponding request.

31. Apparatus (20) for executing mobility management in a mobile communication network, comprising:
an inquiry unit (22) adapted to inquire on availability of a location-related context for a mobile node moving in the mobile communication environment which location-related context is acquired in response to a data transaction **characterized by** a mobile node mobility;
a mobility management unit (24) adapted to execute a mobility management as a function of available location-related context.

32. Apparatus according to claim 31, **characterized in that** the mobility management unit (24) is adapted to execute the mobility management after registration of the mobile node to the mobile communication environment.

33. Apparatus according to claim 31 or 32, **characterized in that** the inquiry unit (22) is further adapted to:
- issue a request for location-related context information to a network node storing related information;
- receive location-related context in response to the request or an indication of non- availability.

34. Apparatus according to one of the claims 31 to 33, **characterized in that** the mobility management unit (24) is adapted to fall back to standard mobility management functionality when a location-related context is not available.

35. Apparatus according to one of the claims 31 to 34, **characterized in that** the mobility management unit is adapted to detect an update of the location-related context for performing the mobility management on the basis of the updated location-related context.

36. Apparatus according to one of the claims 31 to 35, **characterized in that** the mobility management unit (24) comprises a handover control unit (26) adapted to control a handover between different access points in the mobile communication environment and comprises an anticipation unit (30) adapted to use an available location-related context to anticipate the next access point for handover in the mobile communication environment; wherein the anticipation unit (30) is adapted to anticipate the next access point for handover using information selected from a group comprising current location of mobile node, mobile node moving route, mobile node moving schedule, mobile node moving direction, mobile node moving speed, mobile node moving stops.

37. Apparatus according to claim 36, **characterized in that** the mobility management unit (24) further comprises a reservation unit adapted to reserve communication resources at the next access point for handover according to the derived anticipation result.

38. Apparatus according to claim 37, **characterized in that** the mobility management unit is adapted to fall back to standard handover functionality when the mobile node is not identified at the anticipated next access point.

39. Apparatus according to one of the claims 31 to 38, **characterized in that** mobility management unit (24) comprises a paging control unit (28) adapted to determine a paging area with respect to the mobile node and to achieve a paging area size adaptation as a function of the location-related context; wherein the paging control unit (28) is adapted to determine the paging area size according to a group of access points in the mobile communication environment using information selected from a group comprising current location of mobile node, mobile node moving route, mobile node moving schedule, mobile node moving direction, mobile node moving speed, mobile node moving stops, mobile node sojourn area, and mobile node sojourn time period.

40. Apparatus according to claims 38 or 39, **characterized in that** the paging control unit (28) is adapted to fall back to standard paging functionality when the mobile node is not identified in the determined paging area.

41. Computer program product directly loadable into the internal memory of a network node in a mobile communication network comprising software code portions for performing the method of generating a location-related context with respect to a mobile node moving in the mobile communication environment according to one of the claims 1 to 10, when the product is run on a processor of the network node.

42. Computer program product directly loadable into the internal memory of a network node in a mobile communication environment, comprising software code portions for performing the method of executing mobility management according to one of the claims 11 to 20, when the product is run on a processor of the network node.

## Patentansprüche

1. Verfahren zum Erzeugen eines ortsbezogenen Kontext mit Bezug auf einen Mobilknoten, welcher sich in einer Mobilkommunikations-Umgebung bewegt, um eine Mobilitäts-Verwaltung zu unterstützen, **gekennzeichnet durch** die Schritte:
Erlangen (S10) einer Mobilknoten-Mobilitätsinformation in Ansprechen auf eine Datentransaktion, welche eine Mobilknoten-Mobilität kennzeichnet;
Aufbauen (S12) des ortsbezogenen Kontexts für den Mobilknoten als eine Relation zwischen einer Mobilknoten-Identität und einer Mobilknoten-Mobilitätsinformation.

2. Verfahren nach Anspruch 1, **dadurch gekennzeichnet, dass** die Mobilknoten-Mobilitätsinformation eine Mobilknoten-Bewegungsroute identifiziert.

3. Verfahren nach Anspruch 2, **dadurch gekennzeichnet, dass** die Mobilknoten-Mobilitätsinformation ferner einen Mobilknoten-Bewegungsplan identifiziert.

4. Verfahren nach einem der Ansprüche 1 bis 3, **dadurch gekennzeichnet, dass** die Mobilknoten-Mobilitätsinformation einen Mobilknoten-Aufenthaltsbereich identifiziert.

5. Verfahren nach Anspruch 4, **dadurch gekennzeichnet, dass** die Mobilknoten-Mobilitätsinformation ferner eine Mobilknoten-Verweilzeitperiode identifiziert.

6. Verfahren nach einem der Ansprüche 1 bis 3, **dadurch gekennzeichnet, dass** die Datentransaktion aus einer Gruppe ausgewählt ist, welche eine Transportticket-Datentransaktion, Abgabegebühr-Datentransaktion und Reisereservierungs-Datentransaktion enthält.

7. Verfahren nach Anspruch 4 oder 5, **dadurch gekennzeichnet, dass** die Datentransaktion aus einer Gruppe ausgewählt ist, welche eine Hotel-Eincheck-Datentransaktion, Arbeitnehmer-Arbeitszeitstempel-Datentransaktion, Computer-Anmeldungs-Datentransaktion, und Erlaubnisticket-Datentransaktion enthält.

8. Verfahren nach einem der Ansprüche 1 bis 7, **dadurch gekennzeichnet, dass** die Datentransaktion aus einer Gruppe ausgewählt ist, welche eine elektronische Datentransaktion, eine optische Datentransaktion, eine Internet-Datentransaktion und eine Endnutzer-Datentransaktion enthält.

9. Verfahren nach einem der Ansprüche 1 bis 8, **dadurch gekennzeichnet, dass** es ferner den Schritt eines Empfangens von einer Anfrage nach einem ortsbezogenen Kontext von der Mobilkommunikations-Umgebung und eines Auswertens einer Erreichbarkeit davon enthält.

10. Verfahren nach Anspruch 9, **dadurch gekennzeichnet, dass** es ferner den Schritt eines Weiterleitens des ortsbezogenen Kontexts an die Mobilkommunikations-Umgebung enthält, um einen ortsbezogenen Kontext basierend auf einer Mobilitäts-Verwaltung zu unterstützen.

11. Verfahren zum Ausführen einer Mobilitäts-Verwaltung in einem Mobilkommunikations-Netzwerk, welches die Schritte enthält:
Anfragen (S16) einer Erreichbarkeit eines ortsbezogenen Kontext für einen Mobilknoten, welcher sich in der Mobilkommunikations-Umgebung bewegt, wobei der ortsbezogene Kontext in Ansprechen auf eine Datentransaktion erlangt wird, welche eine Mobilknoten-Mobilität kennzeichnet;
Ausführen einer Mobilitäts-Verwaltung (S18) als eine
Funktion eines erreichbaren ortsbezogenen Kontexts.

12. Verfahren nach Anspruch 11, **dadurch gekennzeichnet, dass** die Mobilitäts-Verwaltung nach einer Registrierung des Mobilknotens an der Mobilkommunikations-Umgebung ausgeführt wird.

13. Verfahren nach Anspruch 11 oder 12, **dadurch gekennzeichnet, dass** der Schritt des Anfragens (S16) einer Erreichbarkeit des ortsbezogenen Kontexts für einen Mobilknoten die Schritte enthält:
Ausgeben einer Anfrage nach einer ortsbezogenen Kontext-Information an einen Netzwerkknoten, welcher zugehörige Information speichert;
Empfangen eines ortsbezogenen Kontexts in Ansprechen auf die Anfrage oder einer Anzeige von einer Nicht-Erreichbarkeit.

14. Verfahren nach einem der Ansprüche 11 bis 13, **dadurch gekennzeichnet, dass** es ferner einen Schritt eines Zurückgreifens auf eine standardisierte Mobilitäts-Verwaltungs-Funktionalität enthält, wenn ein ortsbezogener Kontext nicht erreichbar ist.

15. Verfahren nach einem der Ansprüche 11 bis 14, **dadurch gekennzeichnet, dass** es ferner ein Erfassen einer Aktualisierung des ortsbezogenen Kontexts und ein Durchführen der Mobilitäts-Verwaltung auf Basis des aktualisierten ortsbezogenen Kontexts enthält.

16. Verfahren nach einem der Ansprüche 11 bis 15, **dadurch gekennzeichnet, dass** sich die Mobilitäts-Verwaltung (S18) auf einen Hand-Over zwischen unterschiedlichen Zugriffspunkten in der Mobilkommunikations-Umgebung bezieht, und einen erreichbaren ortsbezogenen Kontext verwendet, um den nächsten Zugriffspunkt für einen Hand-Over in der Mobilkommunikations-Umgebung vorherzusagen, und dass der Schritt des Vorhersagens des nächsten Zugriffspunktes für einen Hand-Over eine Information verwendet, welche aus einer Gruppe ausgewählt ist, welche einen derzeitigen Ort eines Mobilknotens, eine Mobilknoten-Bewegungsroute, einen Mobilknoten-Bewegungsplan, eine Mobilknoten-Bewegungsrichtung, eine Mobilknoten-Bewegungsgeschwindigkeit, Mobilknoten-Bewegungsstopps enthält.

17. Verfahren nach Anspruch 16, **dadurch gekennzeichnet, dass** es ferner den Schritt eines Reservierens von Kommunikationsressourcen am nächsten Zugriffspunkt für einen Hand-Over gemäß dem abgeleiteten VorhersageErgebnis enthält.

18. Verfahren nach Anspruch 16 oder 17, **dadurch gekennzeichnet, dass** es ferner den Schritt eines Zurückgreifens auf eine standardisierte Hand-Over Funktionalität enthält, wenn der Mobilknoten nicht am vorhergesagten nächsten Zugriffspunkt identifiziert wird.

19. Verfahren nach einem der Ansprüche 11 bis 15, **dadurch gekennzeichnet, dass** die Mobilitäts-Verwaltung (S18) sich auf eine Bestimmung von einem Funkruf-Bereich mit Bezug auf den Mobilknoten bezieht, dass die Bestimmung des Funkruf-Bereiches eine Funkruf-Bereichsgröße-Adaption als eine Funktion des ortsbezogenen Kontext erlangt, und dass die Funkruf-Bereichsgröße gemäß einer Gruppe von Zugriffspunkten in der Mobilkommunikations-Umgebung unter Verwendung von einer Information bestimmt wird, welche aus einer Gruppe ausgewählt ist, welche einen derzeitigen Ort des Mobilknotens, eine Mobilknoten-Bewegungsroute, einen Mobilknoten-Bewegungsplan, eine Mobilknoten-Bewegungsrichtung, eine Mobilknoten-Bewegungsgeschwindigkeit, Mobilknoten-Bewegungsstopps, einen Mobilknoten-Aufenthaltsbereich und eine Mobilknoten-Verweilzeitperiode enthält.

20. Verfahren nach Anspruch 19, **dadurch gekennzeichnet, dass** es ferner den Schritt eines Zurückgreifens auf eine standardisierte Funkruf-Funktionalität enthält, wenn der Mobilknoten nicht im bestimmten Funkruf-Bereich identifiziert wird.

21. Einrichtung (10) zum Erzeugen eines ortsbezogenen Kontexts mit Bezug auf einen Mobilknoten, welcher sich in einer Mobilkommunikations-Umgebung bewegt, um eine Mobilitäts-Verwaltung zu unterstützen, **gekennzeichnet durch**:
eine Beschaffungseinheit (12), welche dazu angepasst ist, eine Mobilknoten-Mobilitätsinformation in Ansprechen auf eine Datentransaktion zu beschaffen, welche eine Mobilknoten-Mobilität kennzeichnet;
eine Kontext-Einheit (14), welche dazu angepasst ist, den ortsbezogenen Kontext für den Mobilknoten als eine Relation zwischen einer Mobilknoten-Identität und einer Mobilknoten-Mobilitätsinformation aufzubauen.

22. Einrichtung nach Anspruch 21, **dadurch gekennzeichnet, dass** die Beschaffungseinheit (12) dazu angepasst ist, eine Mobilknoten-Mobilitätsinformation als eine Mobilknoten-Bewegungsroute bereitzustellen.

23. Einrichtung nach Anspruch 21 oder 22, **dadurch gekennzeichnet, dass** die Beschaffungseinheit (12) dazu angepasst ist, die Mobilknoten-Mobilitätsinformation als einen Mobilknoten-Bewegungsplan bereitzustellen.

24. Einrichtung nach einem der Ansprüche 21 bis 23, **dadurch gekennzeichnet, dass** die Beschaffungseinheit (12) dazu angepasst ist, eine Mobilknoten-Mobilitätsinformation als einen Mobilknoten-Aufenthaltsbereich bereitzustellen.

25. Einrichtung nach Anspruch 24, **dadurch gekennzeichnet, dass** die Beschaffungseinheit (12) dazu angepasst ist, eine Mobilknoten-Mobilitätsinformation als eine Mobilknoten-Verweilzeitperiode bereitzustellen.

26. Einrichtung nach Anspruch 24 oder 25, **dadurch gekennzeichnet, dass** die Beschaffungseinheit (12) dazu angepasst ist, eine Datentransaktion zu verarbeiten, welche aus einer Gruppe ausgewählt ist, welche eine Transportticket-Datentransaktion, Abgabegebühr-Datentransaktion und Reisereservierungs-Datentransaktion enthält.

27. Einrichtung nach Anspruch 24 oder 25, **dadurch gekennzeichnet, dass** die Beschaffungseinheit (12) dazu angepasst ist, eine Datentransaktion zu verarbeiten, welche aus einer Gruppe ausgewählt ist, welche eine Hotel-Eincheck-Datentransaktion, Arbeitnehmer-Arbeitszeitstempel-Datentransaktion, Computer-Anmeldungs-Datentransaktion und Erlaubnisticket-Datentransaktion enthält.

28. Einrichtung nach einem der Ansprüche 21 bis 27, **dadurch gekennzeichnet, dass** die Beschaffungseinheit (12) dazu angepasst ist, eine elektronische Datentransaktion, eine optische Datentransaktion und eine Endnutzer-Datentransaktion zu verarbeiten.

29. Einrichtung nach Anspruch 21, **dadurch gekennzeichnet, dass** sie eine Schnittstelleneinheit (18) enthält, welche dazu angepasst ist, eine Anfrage nach einem ortsbezogenen Kontext von der Mobilkommunikations-Umgebung zu empfangen, und den ortsbezogenen Kontext an die Mobilkommunikations-Umgebung weiterzuleiten.

30. Einrichtung nach Anspruch 21, **dadurch gekennzeichnet, dass** sie ferner eine Auswertungseinheit enthält, welche dazu angepasst ist, eine Erreichbarkeit eines ortsbezogenen Kontext in Ansprechen auf eine entsprechende Anfrage auszuwerten.

31. Einrichtung (20) zur Ausführung einer Mobilitäts-Verwaltung in einem Mobilkommunikations-Netzwerk, welche enthält:
eine Anfrageeinheit (22), welche dazu angepasst ist, eine Erreichbarkeit eines ortsbezogenen Kontext für einen Mobilknoten anzufragen, welcher sich in der Mobilkommunikations-Umgebung bewegt, wobei der ortsbezogene Kontext in Ansprechen auf eine Datentransaktion beschafft wird, welche durch eine Mobilknoten-Mobilität **gekennzeichnet** ist;
eine Mobilitäts-Verwaltungseinheit (24), welche dazu angepasst ist, eine Mobilitäts-Verwaltung als eine Funktion von einem erreichbaren ortsbezogenen Kontext auszuführen.

32. Einrichtung nach Anspruch 31, **dadurch gekennzeichnet, dass** die Mobilitäts-Verwaltungseinheit (24) dazu angepasst ist, die Mobilitäts-Verwaltung nach einer Registrierung des Mobilknotens an der Mobilkommunikations-Umgebung auszuführen.

33. Einrichtung nach Anspruch 31 oder 32, **dadurch gekennzeichnet, dass** die Anfrageeinheit (22) ferner dazu angepasst ist, um:
eine Anfrage nach einer ortsbezogenen Kontext-Information an einen Netzwerkknoten auszugeben, welcher bezügliche Information speichert;
einen ortsbezogenen Kontext in Ansprechen auf die Anfrage oder eine Anzeige von einer Nicht-Erreichbarkeit zu empfangen.

34. Einrichtung nach einem der Ansprüche 31 bis 33, **dadurch gekennzeichnet, dass** die Mobilitäts-Verwaltungseinheit (24) dazu angepasst ist, auf eine standardisierte Mobilitäts-Verwaltungs-Funktionalität zurückzugreifen, wenn ein ortsbezogener Kontext nicht erreichbar ist.

35. Einrichtung nach einem der Ansprüche 31 bis 34, **dadurch gekennzeichnet, dass** die Mobilitäts-Verwaltungseinheit dazu angepasst ist, eine Aktualisierung des ortsbezogenen Kontext zum Durchführen der Mobilitäts-Verwaltung auf Basis des aktualisierten ortsbezogenen Kontexts zu erfassen.

36. Einrichtung nach einem der Ansprüche 31 bis 35, **dadurch gekennzeichnet, dass** die Mobilitäts-Verwaltungseinheit (24) eine Hand-Over Steuereinheit (26) enthält, welche dazu angepasst ist, einen Hand-Over zwischen unterschiedlichen Zugriffspunkten in der Mobilkommunikations-Umgebung zu steuern, und eine Vorhersageeinheit (30) enthält, welche dazu angepasst ist, einen erreichbaren ortsbezogenen Kontext zum Vorhersagen des nächsten Zugriffspunktes für einen Hand-Over in der Mobilkommunikations-Umgebung zu verwenden, wobei die Vorhersageeinheit (30) dazu angepasst ist, den nächsten Zugriffspunkt für einen Hand-Over unter Verwendung von einer Information vorherzusagen, welche aus einer Gruppe ausgewählt ist, welche einen derzeitigen Ort des Mobilknotens, eine Mobilknoten-Bewegungsroute, einen Mobilknoten-Bewegungsplan, eine Mobilknoten-Bewegungsrichtung, eine Mobilknoten-Bewegungsgeschwindigkeit, Mobilknoten-Bewegungsstopps enthält.

37. Einrichtung nach Anspruch 36, **dadurch gekennzeichnet, dass** die Mobilitäts-Verwaltungseinheit (24) ferner eine Reservierungseinheit enthält, welche dazu angepasst ist, Kommunikationsressourcen am nächsten Zugriffspunkt für einen Hand-Over gemäß dem abgeleiteten Vorhersageergebnis zu reservieren.

38. Einrichtung nach Anspruch 37, **dadurch gekennzeichnet, dass** die Mobilitäts-Verwaltungseinheit dazu angepasst ist, auf eine standardisierte Hand-Over Funktionalität zurückzugreifen, wenn der Mobilknoten am vorhergesagten nächsten Zugriffspunkt nicht identifiziert ist.

39. Einrichtung nach einem der Ansprüche 31 bis 38, **dadurch gekennzeichnet, dass** die Mobilitäts-Verwaltungseinheit (24) eine Funkruf-Steuereinheit (28) enthält, welche dazu angepasst ist, einen Funkruf-Bereich mit Bezug auf den Mobilknoten zu bestimmen, und eine Funkruf-Bereichsgröße-Adaption als eine Funktion des ortsbezogenen Kontext zu erlangen, wobei die Funkruf-Steuereinheit (28) dazu angepasst ist, die Funkruf-Bereichsgröße gemäß einer Gruppe an Zugriffspunkten in der Mobilkommunikations-Umgebung unter Verwendung von einer Information zu bestimmen, welche aus einer Gruppe ausgewählt ist, welche einen derzeitigen Ort des Mobilknotens, eine Mobilknoten-Bewegungsroute, einen Mobilknoten-Bewegungsplan, eine Mobilknoten-Bewegungsrichtung, eine Mobilknoten-Bewegungsgeschwindigkeit, Mobilknoten-Bewegungsstopps, einen Mobilknoten-Aufenthaltsbereich und eine Mobilknoten-Verweilzeitperiode enthält.

40. Einrichtung nach Anspruch 38 oder 39, **dadurch gekennzeichnet, dass** die Funkruf-Steuereinheit (28) dazu angepasst ist, auf eine standardisierte Funkruf-Funktionalität zurückzugreifen, wenn der Mobilknoten im bestimmten Funkruf-Bereich nicht identifiziert ist.

41. Computerprogrammprodukt, welches direkt in den internen Speicher eines Netzwerkknotens in einem Mobilkommunikations-Netzwerk ladbar ist, welches Softwarecode-Abschnitte zum Durchführen des Verfahrens zum Erzeugen eines ortsbezogenen Kontext mit Bezug auf einen Mobilknoten, welcher sich in der Mobilkommunikations-Umgebung bewegt, enthält, nach einem der Ansprüche 1 bis 10, wenn das Produkt auf einem Prozessor des Netzwerkknotens läuft.

42. Computerprogrammprodukt, welches direkt in den internen Speicher eines Netzwerkknotens in einer Mobilkommunikations-Umgebung ladbar ist, welches Softwarecode-Abschnitte zum Durchführen des Verfahrens zur Ausführung einer Mobilitäts-Verwaltung nach einem der Ansprüche 11 bis 20 enthält, wenn das Produkt auf einem Prozessor des Netzwerkknotens läuft.

## Revendications

1. Procédé de génération d'un contexte relatif à un emplacement concernant un noeud mobile se déplaçant dans un environnement de communication mobile, pour aider à la gestion de mobilité, **caractérisé par** les étapes consistant à:
acquérir (S10) des informations sur la mobilité d'un noeud mobile, en réponse à une transaction de données caractérisant une mobilité d'un noeud mobile ;
établir (S12) le contexte relatif à l'emplacement pour le noeud mobile, en tant que relation entre une identité d'un noeud mobile et des informations sur la mobilité d'un noeud mobile.

2. Procédé selon la revendication 1, **caractérisé en ce que** des informations sur la mobilité d'un noeud mobile identifient un trajet de déplacement d'un noeud mobile.

3. Procédé selon la revendication 2, **caractérisé en ce que** les informations sur la mobilité d'un noeud mobile identifient en outre un horaire de déplacement d'un noeud mobile.

4. Procédé selon l'une des revendications 1 à 3, **caractérisé en ce que** des informations sur la mobilité d'un noeud mobile identifient une zone d'immobilisation d'un noeud mobile.

5. Procédé selon la revendication 4, **caractérisé en ce que** des informations sur la mobilité d'un noeud mobile identifient en outre une période de temps d'immobilisation d'un noeud mobile.

6. Procédé selon l'une des revendications 1 à 3, **caractérisé en ce que** la transaction de données est sélectionnée à partir d'un groupe comprenant une transaction de données sur des tickets de transport, une transaction de données sur des péages, et une transaction de données sur des réservations de voyages.

7. Procédé selon la revendication 4 ou 5, **caractérisé en ce que** la transaction de données est sélectionnée à partir d'une groupe comprenant une transaction de données d'inscription à un hôtel, une transaction de données sur un pointage d'employé à l'arrivée, une transaction de données sur des ouvertures de sessions informatiques, et une transaction de données sur des tickets d'entrée.

8. Procédé selon l'une des revendications 1 à 7, **caractérisé en ce que** la transaction de données est sélectionnée à partir d'un groupe comprenant une transaction de données électroniques, une transaction de données optiques, une transaction de données sur l'Internet, et une transaction de données d'utilisateur final.

9. Procédé selon l'une des revendications 1 à 8, **caractérisé en ce qu'**il comprend en outre l'étape consistant à recevoir une demande d'un contexte relatif à l'emplacement, provenant de l'environnement de communication mobile, et à évaluer la disponibilité de celui-ci.

10. Procédé selon la revendication 9, **caractérisé en ce qu'**il comprend en outre l'étape consistant à expédier le contexte relatif à l'emplacement à l'environnement de communication mobile, pour l'aide à la gestion de mobilité sur base du contexte relatif à l'emplacement.

11. Procédé d'exécution d'une gestion de mobilité dans un réseau de communication mobile, comprenant les étapes consistant à :
rechercher (S16) la disponibilité d'un contexte relatif à un emplacement pour un noeud mobile se déplaçant dans un environnement de communication mobile, lequel contexte relatif à l'emplacement est acquis en réponse à une transation de données caractérisant la mobilité d'un noeud mobile ;
exécuter la gestion de mobilité (S18) en fonction du contexte disponible relatif à l'emplacement.

12. Procédé selon la revendication 11, **caractérisé en ce que** la gestion de mobilité est exécutée après l'enregistrement du noeud mobile dans l'environnement de communication mobile.

13. Procédé selon la revendication 11 ou 12, **caractérisé en ce que** l'étape de recherche (S16) de la disponibilité d'un contexte relatif à un emplacement pour un noeud mobile comprend les étapes consistant à :
- présenter une demande pour des informations sur un contexte relatif à un emplacement, à un noeud réseau stockant des informations associées ;
- recevoir un contexte relatif à l'emplacement en réponse à la demand ou une indication de non disponibilité.

14. Procédé selon l'une des revendications 11 à 13, **caractérisé en ce qu'**il comprend en outre une étape consistant à recourir à une fonctionnalité standard de gestion de mobilité, lorsqu'un contexte relatif à un emplacement n'est pas disponible.

15. Procédé selon l'une des revendications 11 à 14, **caractérisé en ce qu'**il comprend en outre la détection d'une mise à jour du contexte relatif à l'emplacement et l'exécution de la gestion de mobilité sur base du contexte relatif à l'emplacement, mis à jour.

16. Procédé selon l'une des revendications 11 à 15, **caractérisé en ce que** la gestion de mobilité (S18) est associée à une prise en charge entre différents points d'accès dans l'environnement de communication mobile, et utilise un contexte disponible relatif à un emplacement pour anticiper le point d'accès suivant pour une prise en charge dans l'environnement de communication mobile, et **en ce que** l'étape d'anticipation du point d'accès suivant pour une prise en charge utilise des informations sélectionnées à partir d'un groupe comprenant l'emplacement actuel d'un noeud mobile, le trajet de déplacement d'un noeud mobile, l'horaire de déplacement d'un noeud mobile, la direction de déplacement d'un noeud mobile, la vitesse de déplacement d'un noeud mobile, les arrêts pendant le déplacement d'un noeud mobile.

17. Procédé selon la revendication 16, **caractérisé en ce qu'**il comprend en outre l'étape consistant à réserver des ressources de communication au niveau du point d'accès suivant pour une prise en charge selon le résultat de l'anticipation dérivé.

18. Procédé selon la revendication 16 ou 17, **caractérisé en ce qu'**il comprend en outre l'étape consistant à recourir à une fonctionnalité standard de prise en charge lorsque'le noeud mobile n'est pas identifié au point d'accès suivant anticipé.

19. Procédé selon l'une des revendications 11 à 15, **caractérisé en ce que** la gestion de mobilité (S18) est associée à une détermination d'une zone de recherche de personnes concernant le noeud mobile, **en ce que** la détermination de la zone de recherche de personnes fournit une adaptation de la taille de la zone de recherche dé personnes en fonction du contexte relatif à l'emplacement, et **en ce que** la taille de la zone de recherche de personnes est déterminée suivant un groupe de points d'accès dans l'environnement de communication mobile, en utilisant des informations sélectionnées à partir d'un groupe comprenant l'emplacement actuel d'un noeud mobile, le trajet de déplacement d'un noeud mobile, l'horaire de déplacement d'un noeud mobile, la direction de déplacement d'un noeud mobile, la vitesse de déplacement d'un noeud mobile, les arrêts pendant le déplacement d'un noeud mobile, une zone d'immobilisation d'un noeud mobile et une période de temps d'immobilisation d'un noeud mobile.

20. Procédé selon la revendication 19, **caractérisé en ce qu'**il comprend en outre l'étape consistant à recourir à une fonctionnalité standard de recherche de personnes lorsque le noeud mobile n'est pas identifié dans la zone déterminée de recherche de personnes.

21. Appareil (10) pour générer un contexte relatif à un emplacement concernant un noeud mobile se déplaçant dans un environnement de communication mobile, pour aider à la gestion de mobilité, l'appareil étant **caractérisé par** :
une unité d'acquisition (12) propre à acquérir des informations sur la mobilité d'un noeud mobile, en réponse à une transaction' de données caractérisant la mobilité d'un noeud mobile ;
une unité de contexte (14) propre à établir le contexte relatif à l'emplacement pour le noeud mobile, en tant que relation entre une identité d'un noeud mobile et les informations sur la mobilité d'un noeud mobile.

22. Appareil selon la revendication 21, **caractérisé en ce que** l'unité d'acquisition (12) est propre à fournir des informations sur la mobilité d'un noeud mobile, en tant que trajet de déplacement d'un noeud mobile.

23. Appareil selon la revendication 21 ou 22, **caractérisé en ce que** l'unité d'acquisition (12) est propre à fournir des informations sur la mobilité d'un noeud mobile, en tant qu'horaire de déplacement d'un noeud mobile.

24. Appareil selon l'une des revendications 21 à 23, **caractérisé en ce que** l'unité d'acquisition (12) est propre à fournir des informations sur la mobilité d'un noeud mobile, en tant que zone d'immobilisation d'un noeud mobile.

25. Appareil selon la revendication 24, **caractérisé en ce que** l'unité d'acquisition (12) est propre à fournir des informations sur la mobilité d'un noeud mobile, en tant que période de temps d'immobilisation d'un noeud mobile.

26. Appareil selon la revendication 24 ou 25, **caractérisé en ce que** l'unité d'acquisition (12) est propre à traiter une transaction de données, sélectionnée à partir d'un groupe comprenant une transaction de données sur des tickets de transport, une transaction de données sur des péages, et une transaction de données sur des réservations de voyages.

27. Appareil selon la revendication 24 ou 25, **caractérisé en ce que** l'unité d'acquisition (12) est propre à traiter une transaction de données, sélectionnée à partir d'un groupe comprenant une transaction de données d'inscription à un hôtel, une transaction de données sur un pointage d'employé à l'arrivée, une transaction de données sur des ouvertures de sessions informatiques, et une transaction de données sur des tickets d'entrée.

28. Appareil selon l'une des revendications 21 à 27, **caractérisé en ce que** l'unité d'acquisition (12) est propre à traiter une transaction de données électroniques, une transaction de données optiques, et une transaction de données d'utilisateur final.

29. Appareil selon la revendication 21, **caractérisé en ce qu'**il comprend une unité d'interface (18), qui est propre à recevoir une demande pour un contexte relatif à l'emplacement, provenant de l'environnement de communication mobile, et à expédier le contexte relatif à l'emplacement, à l'environnement de communication mobile.

30. Appareil selon la revendication 21, **caractérisé en ce qu'**il comprend en outre une unité d'évaluation propre à évaluer une disponibilité d'un contexte relatif à l'emplacement, en réponse à une demande correspondante.

31. Appareil (20) pour l'exécution d'une gestion de mobilité dans un réseau de communication mobile, comprenant :
une unité de recherche (22) propre à rechercher la disponibilité d'un contexte relatif à un emplacement pour un noeud mobile se déplaçant dans l'environnement de communication mobile, lequel contexte relatif à l'emplacement est acquis en réponse à une transaction de données **caractérisée par** la mobilité d'un noeud mobile ;
une unité de gestion de mobilité (24) propre à exécuter une gestion de mobilité en fonction du contexte disponible relatif à l'emplacement.

32. Appareil selon la revendication 31, **caractérisé en ce que** l'unité de gestion de mobilité (24) est propre à exécuter la gestion de mobilité après l'enregistrement du noeud mobile dans l'environnement de communication mobile.

33. Appareil selon la revendication 31 ou 32, **caractérisé en ce que** l'unité de recherche (22) est en outre propre à :
- présenter une demande pour des informations sur un contexte relatif à un emplacement, à un noeud réseau stockant des informations associées ;
- recevoir un contexte relatif à l'emplacement en réponse à la demande ou une indication de non disponibilité.

34. Appareil selon l'une des revendications 31 à 33, **caractérisé en ce que** l'unité de gestion de mobilité (24) est propre à recourir à une fonctionnalité standard de gestion de mobilité, lorsqu'un contexte relatif à un emplacement n'est pas disponible.

35. Appareil selon l'une des revendications 31 à 34, **caractérisé en ce que** l'unité de gestion de mobilité est propre à détecter une mise à jour du contexte relatif à l'emplacement, pour exécuter la gestion de mobilité sur base du contexte relatif à l'emplacement, mis à jour.

36. Appareil selon l'une des revendications 31 à 35, **caractérisé en ce que** l'unité de gestion de mobilité (24) comprend une unité de commande de prise en charge (26) propre à commander une prise en charge entre différents points d'accès dans l'environnement de communication mobile, et comprend une unité d'anticipation (30) propre à utiliser un contexte disponible relatif à un emplacement pour anticiper le point d'accès suivant pour une prise en charge dans l'environnement de communication mobile ; dans lequel l'unité d'anticipation (30) est propre à anticiper le point d'accès suivant pour une prise en charge, en utilisant des informations sélectionnées à partir d'un groupe comprenant l'emplacement actuel d'un noeud mobile, le trajet de déplacement d'un noeud mobile, l'horaire de déplacement d'un noeud mobile, la direction de déplacement d'un noeud mobile, la vitesse de déplacement d'un noeud mobile, les arrêts pendant le déplacement d'un noeud mobile.

37. Appareil selon la revendication 36, **caractérisé en ce que** l'unité de gestion de mobilité (24) comprend en outre une unité de réservation, propre à réserver des ressources de communication au point d'accès suivant pour une prise en charge selon le résultat dérivé de l'anticipation.

38. Appareil selon la revendication 37, **caractérisé en ce que** l'unité de gestion de mobilité est propre à recourir à une fonctionnalité standard de prise en charge lorsque le noeud mobile n'est pas identifié au point d'accès suivant anticipé.

39. Appareil selon l'une des revendications 31 à 38, **caractérisé en ce que** l'unité de gestion de mobilité (24) comprend une unité de commande de recherche de personnes (28) propre à déterminer une zone de recherche de personnes concernant le noeud mobile, et à effectuer une adaptation de la taille de la zone de recherche de personnes en fonction du contexte relatif à l'emplacement ; dans lequel l'unité de commande de recherche de personnes (28) est propre à déterminer la taille de la zone de recherche de personnes suivant un groupe de points d'accès dans l'environnement de communication mobile, en utilisant des informations sélectionnées à partir d'un groupe comprenant l'emplacement actuel d'un noeud mobile, le trajet de déplacement d'un noeud mobile, l'horaire de déplacement d'un noeud mobile, la direction de déplacement d'un noeud mobile, la vitesse de déplacement d'un noeud mobile, les arrêts pendant le déplacement d'un noeud mobile, une zone d'immobilisation d'un noeud mobile et une période de temps d'immobilisation d'un noeud mobile.

40. Appareil selon la revendication 38 ou 39, **caractérisé en ce que** l'unité de commande de recherche de personnes (28) est propre à recourir à une fonctionnalité standard de recherche de personnes lorsque le noeud mobile n'est pas identifié dans la zone déterminée de recherche de personnes.

41. Produit programme d'ordinateur, chargeable directement dans la mémoire interne d'un noeud réseau dans un réseau de communication mobile, comprenant des parties de code logiciel pour exécuter le procédé de génération d'un contexte relatif à un emplacement en ce qui concerne un noeud mobile se déplaçant dans l'environnement de communication mobile selon l'une des revendications 1 à 10, lorsque le produit passe sur un processeur du noeud réseau.

42. Produit programme d'ordinateur, chargeable directement dans la mémoire interne d'un noeud réseau dans un environnement de communication mobile, comprenant des parties de code logiciel pour exécuter le procédé d'exécution de gestion mobilité selon l'une des revendications 11 à 20, lorsque le produit passe sur un processeur du noeud réseau.
